## Europäisches Patentamt

## European Patent Office

## Office européen des brevets

(19)

(11)　　EP 1 204 330 B1

(12)　　EUROPEAN PATENT SPECIFICATION

(45) Date of publication and mention
of the grant of the patent:
**23.06.2004 Bulletin 2004/26**

(51) Int Cl.$^7$: **A23G 1/18**

(86) International application number:
**PCT/NL2000/000525**

(21) Application number: **00950073.7**

(22) Date of filing: **24.07.2000**

(87) International publication number:
**WO 2001/006863 (01.02.2001 Gazette 2001/05)**

(54) **METHOD FOR THE MANUFACTURE OF CHOCOLATE**

VERFAHREN ZUR HERSTELLUNG VON SCHOKOLADE

PROCEDE DE FABRICATION DE CHOCOLAT

(84) Designated Contracting States:
**AT BE CH CY DE DK ES FI FR GB GR IE IT LI LU MC NL PT SE**

(30) Priority: **23.07.1999　NL 1012691**

(43) Date of publication of application:
**15.05.2002　Bulletin 2002/20**

(73) Proprietor: **B.V. MACHINEFABRIEK P.M. DUYVIS**
**1541 KD Koog aan de Zaan (NL)**

(72) Inventors:
 • **VAN MALSSEN, Kees, Frederik**
　**NL-1441 VH Purmerend (NL)**
 • **VAN LANGEVELDE, Adriaan, Jan**
　**NL-1316 LC Almere (NL)**
 • **SCHENK, Hendrik**
　**NL1544 AK Zaandijk (NL)**
 • **PESCHAR, René**
　**NL-1097 AL Amsterdam (NL)**

(74) Representative: **Kupecz, A., Drs. c.s.**
**Octrooibureau Los en Stigter B.V.**
**Weteringschans 96**
**1017 XS Amsterdam (NL)**

(56) References cited:
　**EP-A- 0 496 310**　　　　**EP-A- 0 521 205**
　**EP-A- 0 765 606**　　　　**EP-A- 0 768 038**
　**WO-A-98/30108**　　　　**DE-A- 2 602 877**
　**GB-A- 2 048 928**　　　　**US-A- 4 283 436**

 • **KOYANO T ET AL: "FAT POLYMORPHISM AND CRYSTAL SEEDING EFFECTS ON FAT BLOOM STABILITY OF DARK CHOCOLATE" FOOD STRUCTURE,US,SCANNING MICROSCOPY INTERNATIONAL, CHICAGO, IL, vol. 9, 1 January 1990 (1990-01-01), pages 231-240, XP002061521 ISSN: 1046-705X**

**Description**

The present invention relates to a method comprising

a) the preparation of a cooled but still liquid chocolate mass which comprises i) a fat selected from cocoa butter and cocoa butter equivalents (CBE), and at least one component selected from a) sugar, b) cocoa mass and c) cocoa powder,
b) mixing the liquid chocolate mass with a seed material, and
c) allowing the mixture to cool to a first temperature below the melting temperature of chocolate, producing solid chocolate,

the seed material used in step b) being cooled mixture.

Such a method is known from the European patent application 0 765 606. This describes how chocolate mass from a vessel is subjected to ultrasonic treatment in order to form stable β polymorph crystals. A portion of the thus-treated mass is cooled and returned to the vessel.

The disadvantage of this method is that an apparatus is required for the generation of ultrasound for the removal of unstable polymorph crystals formed with the method, while in addition to this outlay also raising the energy costs during production of a chocolate product.

The object of the present invention is to provide a method according to the preamble with which the disadvantages are to large extent eliminated. It is the particular object of the invention to provide a method producing such a chocolate, which includes a chocolate product, which during prolonged storage will develop no or only a slight amount of white efflorescence (will exhibit less or no fat bloom).

To this end the method according to the present invention is characterized in that when preparing the liquid chocolate mass, it is heated to above the critical temperature, and subsequently cooled to a second temperature between the first temperature and the critical temperature, the thus cooled chocolate mass is mixed with the seed material, the seed material used being cooled mixture at a temperature above 30°C, but which liquid substance has not exceeded the critical temperature and which substantially does not contain any crystalline material in the β' phase, and in that to produce solid chocolate, the mixture is subsequently cooled to the first temperature.

Thus a simplified method is provided for the preparation of chocolate which during prolonged storage will exhibit less fat bloom or none at all. Compared with the known method, the energy consumption is limited. In the present application the critical temperature is the temperature at which all forms of crystalline fat have changed to the molten state. This temperature may be determined by melting a sample whose fat is in the β condition (obtained, for example, by leaving molten chocolate for at least three days at a temperature of 22°C) and to heat it to a temperature X and to maintain it for one minute at that temperature. The mass is subsequently cooled to 23°C at a rate of 1°C/min. (while avoiding that the liquid chocolate mass comes into contact with a surface whose temperature is more than 3°C lower than that of the chocolate mass), and examined to see whether the β or the β'phase develops. This experiment is carried out mechano-statically. That temperature X is the critical temperature with which after cooling again solid chocolate is obtained whose crystallization phase is substantially β'. The melting point of chocolate depends to some extent on the rate of cooling during production. Moreover, the melting point is not one single value, because chocolate has a melting range of several degrees. Indications of temperature with regard to melting temperature are in the present application related to the lowest value of the melting range. For a reliable process, the liquid chocolate mass will generally be heated to at least 2°C, preferably to at least 5°C above the critical temperature. A higher temperature shortens the time during which the chocolate mass has to be heated above the critical temperature. In the present application, the first temperature is understood to be the temperature at which molten chocolate mass is solidified. This temperature is below the melting temperature of the chocolate. The second temperature, which may also be called the mixing temperature, is suitably at least 2°C below the critical temperature and at least 2°C above the first temperature, conveniently above the melting temperature of the chocolate. Cocoa butter is preferably mixed at a temperature in the vicinity of $T_{opt}$ obtained with the (empirical) formula:

$$T_{opt} = 1.44*[St] - 3.3*[Ar]-6$$

[St] being the concentration of stearic acid and [Ar] the concentration of arachidic acid as present in the free and in the ester form in cocoa butter. When the present application refers to a substance not having exceeded the critical temperature, this means counting from the last time the substance is at least partially in a crystalline (β) phase.

As an alternative to ultrasonic treatment it is known in the art to add seed crystals to a liquid chocolate mass (Hachiya, I., et al. in Seeding Effects on Solidification Behaviour of Cocoa Butter and Dark Chocolate. II. Physical Properties of Dark Chocolate, in *J. Amer. Oil Chem. Soc.* 66:1763-1770 (1989).

Such a method has several disadvantages. First, solid chocolate has to be ground into (preferably the smallest possible) seed crystals. Second, said seed crystals should be mixed as homogeneously as possible with the liquid chocolate mass. Until now, these disadvantages have prevented the application of this method in large-scale production of chocolate, which term includes in the present invention also chocolate-comprising products such as biscuits with chocolate, and the like.

WO 98/30108 discloses a method of producing chocolate with seeding agents such as powders of stable crystals of a fat or oil, SOS, BOB, SSS, cocoa butter or extracts thereof, and other naturally occurring or synthetic triglycerides.

Preferably, in the cooling steps, the temperature of the wall (that is to say the interior wall) is suitably at most 5°C lower than the temperature of the optionally seeded or unseeded liquid chocolate mass, preferably at most 3°C lower, and most preferably at most 2°C.

This ensures that the fat in the solid chocolate will not be in the undesirable β' phase.

The preparation of chocolate has been widely researched. This has also involved fundamental research on the behaviour of its components such as the crystallization behaviour of cocoa butter. Schlichter-Aronhime, J. et al. (ref.1) described the formation of stable crystalline seed material in a melt. This may be done by alternating the temperature causing low-melting crystals to redissolve while more stable crystals are left. Hence, the method described in said (and other) publications relates to cocoa butter in non-stirred (static) conditions. The above publication does not concern a liquid chocolate mass which after all contains in addition a sweetener such as sugar and optionally cocoa powder. It is well known in the art that these factors affect the crystallization behaviour (of fat) in the chocolate. Ref. 2, for example, describes the differences between static and dynamic formation of chocolate. Refs. 3 and 4 describe the effects of other components on the formation of chocolate, and in particular that these may have a considerable effect on the same.

To start the process of a continuous production, cocoa butter may be used as the seed material, as prepared according to Ref. 5, whereas subsequently mixture cooled to approximately the first temperature but having a temperature of at least 30°C, is used as seed material.

Consequently, once production is started up, this seed material is available in liberal quantities since it can be obtained just prior to the mixture cooling to below the first temperature. In accordance with an alternative embodiment, mixture that is cooled to below the first temperature may be remelted, taking care not to exceed the critical temperature. In each of the cases the seed material is added at a temperature lower than the critical temperature and at a temperature of at least 30°C, such as suitably at least 32°C. In practice, the seed material will be added at a temperature that is the same as, or lower than the second temperature. The temperature may advantageously be chosen such that it contributes to the further cooling of the liquid chocolate mass.

The quantity of liquid substance being added is preferably 10 - 20% by volume of the fat content of the final mixture.

Although the amount of liquid substance added as seed material may vary greatly, for example between 5 and 90%, the above-mentioned preferred range of percentages will provide a method combining a large production volume with limited sensitivity to variations in the production conditions, such as changes in the composition of components and temperature variations within the installation where the method is applied.

Prior to being mixed with the seed material, it is advantageous for the liquid chocolate mass to be cooled to a second temperature of at least 4°C below the critical temperature.

This provides a robust process that is less sensitive to temperature deviations.

Advantageously, cooling to the first temperature takes place subsequent to the addition of the seed material, at a rate of 0.2 - 3°C/min.

Preferably the method is carried out as a continuous process.

Continuous process simplifies the method to a considerable extent, especially since seed material can be added in a simple manner from downstream product streams.

According to a preferred embodiment the mixture is divided into a first relatively small stream and a second relatively large stream, wherein the first stream is cooled more slowly than the second stream and subsequently used as seed material, whereas the second stream is cooled yielding solid chocolate.

Cooling the small stream that is used as the seed material more slowly, ensures that high-quality seed material is obtained and allows the second stream to be cooled relatively quickly yielding solid chocolate with the desired qualities.

The present invention will now be elucidated with reference to the following exemplary embodiments.

**Example**

For all the experiments and the control experiments chocolate was prepared consisting of 9.0% defatted cocoa powder (natural, fat content < 0.5%), 35.0% cocoa butter (soft butter from Bahia, iodine value 41, having the fat composition shown in table I), 55.5% fine powder sugar and 0.5% lecithin.

TABLE I

| Iodine value triglycerides fatty acids | | | | |
|---|---|---|---|---|
| Iodine value | Triglycerides | % | Fatty acids | % |
| 40,7 | C48 | 0,3 | C16:0 | 23,5 |
| | C50 | 16,4 | C16:1 | 0,3 |
| | C52 | 44,7 | C18:0 | 31,8 |
| | C54 | 36,6 | C18:1 | 38,8 |
| | C56 | 2,0 | C18:2 | 4,1 |
| | | | C18:3 | 0,3 |

The iodine value is determined by the Wijs method (IUPAC method 2.205). The triglyceride composition is determined by GLC (IUPAC method 2.323) and the fatty acid composition is determined with the aid of GLC via fatty acid methyl esters (IUPAC methods 2.301 and 2.302).

**EXAMPLE I**

For the preparation of 750 g chocolate the cocoa powder and the sugar were mixed, and heated to 60°C in an oven. To this mixture a portion of the warm cocoa butter is admixed, is yielding a chocolate mass with a fat content of 25%. This chocolate mass is rolled with 700-800 kPa/cm$^2$ at approximately 30°C in order to reduce the cocoa particles and sugar, and reheated to 60°C and mixed and again rolled, now with 900-1000 kPa/cm$^2$ at approximately 30°C. More cocoa butter is added such that the mixture contains 80% of the total quantity of cocoa butter. Immediately after rolling and the addition of more cocoa butter the chocolate mass is heated for 30 minutes at 60°C, yielding a liquid chocolate mass. The temperature of 60°C is 20-22°C above the critical temperature.

The remaining cocoa butter (the cocoa butter used had solidified through natural cooling, and had been stored for certainly more than three days) is molten together with the lecithin and under stirring heated to 34°C. This is done in a vessel having a wall temperature of 35°C in order to ensure that none of the cocoa butter reaches a temperature above the critical temperature.

The liquid chocolate mass is cooled to 34°C (wall temperature above 26°C) and the mixture of cocoa butter and lecithin is admixed with the liquid chocolate mass. The mixture thus obtained is cooled under stirring to 26°C in a vessel with a wall temperature of 26°C. This temperature is below the melting temperature of the chocolate (melting range 30.1-34.5°C. The thus cooled chocolate is immediately poured into moulds that have been heated to 26°C, vibrated to remove the air bubbles, and subsequently kept at 26°C for 1.5 hours. The filled moulds are then stored for 30 minutes at 10°C to facilitate the removal of the chocolate from the moulds. After removal, the chocolate is wrapped in aluminium foil.

**EXAMPLE II**

A quantity of material to be rolled (composition: minimum total content of cocoa 25% (of which at least 6.7% defatted dry cocoa and at least 18% cocoa butter), at least 21.5% of milk constituents (of which at least 7.5% milk at) and at least 46% sucrose)) is heated to 55-60°C in an oven (mixture A). Subsequently it is cooled to 36°C on a water bath of 36°C.

Separately, 65.8 g of cocoa butter and 2.5% lecithin are mixed and heated to 36°C (mixture B).

Mixture A and 54 g of mixture B are combined at 36°C and cooled to 25°C. After 30 minutes material poured into moulds is cooled to 10°C.

The addition of partially cooled mixture B (or product molten again to at least 30°C) to a mixture A, results in chocolate products that exhibit the same favourable fat bloom characteristics as chocolate obtained directly from mixture A and mixture B.

### References

1) Schlichter-Aronhime, J. et al. Solidification and Polymorphism in Cocoa Butter and the Blooming Problems, in *Crystallization and Polymorphism of Fats and Fatty Acids*, Surfactant Science Series, Vol. 31, edited by N. Garti and K. Sato, Marcel Dekker Inc., New York, pp. 363-393, (1988)

2) Loisel, C. et al. Dynamic Crystallization of Dark Chocolate as Affected by Temperature and Lipid Additives in Journal of Food Science <u>63</u> (1), pp 73-79, (1998)

3) Seguine, E. S., Tempering, the inside story, Manufact. Conf. 71:117-125 (1991)

4) Bricknell J. et al. Relation of Fat Bloom in Chocolate to Polymorphic Transition in Cocoa Butter, JAOCS, Vol. 75, No. 1, pp 1609-1615, (1998)

5) Adenier, H. et al., Solidification and Polymorphism in Cocoa Butter and the Blooming problems, Ind. Aliment. Vol. 4, p 315 (1978)

### Claims

1. A method for the manufacture of chocolate, which method comprises

   a) the preparation of a cooled but still liquid chocolate mass which comprises i) a fat selected from cocoa butter and cocoa butter equivalents (CBE), and at least one component selected from a) sugar, b) cocoa mass and c) cocoa powder,
   b) mixing the liquid chocolate mass with a seed material, and
   c) allowing the mixture to cool to a first temperature below the melting temperature of chocolate, producing solid chocolate,

   the seed material used in step b) being cooled mixture, **characterized in that** when preparing the liquid chocolate mass, it is heated to above the critical temperature, and subsequently cooled to a second temperature between the first temperature and the critical temperature, the thus cooled chocolate mass is mixed with the seed material, the seed material used being cooled mixture at a temperature above 30°C, but which liquid substance has not exceeded the critical temperature and which substantially does not contain any crystalline material in the β' phase, and **in that** to produce solid chocolate, the mixture is subsequently cooled to the first temperature.

2. A method according to claim 1, **characterized in that** the quantity of liquid substance being added is 10 - 20% by volume of the fat content of the final mixture.

3. A method according to claim 1 or 2, **characterized in that** prior to being mixed with the seed material, the liquid chocolate mass is cooled to a second temperature of at least 4°C below the critical temperature.

4. A method according to one of the preceding claims, **characterized in that** cooling to the first temperature after the addition of the seed material, takes place at a rate of 0.2 - 3°C/min.

5. A method according to one of the preceding claims, **characterized in that** the method is carried out as a continuous process.

6. A method according to claim 5, **characterized in that** the mixture is divided into a first relatively small stream and a second relatively large stream, wherein the first stream is cooled more slowly than the second stream, and subsequently used as seed material, whereas the second stream is cooled yielding solid chocolate.

### Patentansprüche

1. Verfahren zur Herstellung von Schokolade, welches umfasst:

a) die Herstellung einer gekühlten, aber noch flüssigen Schokoladenmasse, die umfasst i) ein Fett, ausgewählt aus Kakaobutter und Kakaobutteräquivalenten (CBE), und wenigstens eine Komponente, ausgewählt aus a) Zucker, b) Kakaomasse und c) Kakaopulver,
b) Mischen der flüssigen Schokoladenmasse mit einem Impfmaterial und
c) Abkühlen lassen der Mischung auf eine erste Temperatur unterhalb der Schmelztemperatur der Schokolade unter Herstellung fester Schokolade,

wobei das in Schritt b) verwendete Impfmaterial gekühlte Mischung ist,
**dadurch gekennzeichnet, dass** beim Herstellen der flüssigen Schokoladenmasse diese auf oberhalb der kritischen Temperatur erwärmt und anschließend auf eine zweite Temperatur zwischen der ersten Temperatur und der kritischen Temperatur abgekühlt wird, die so gekühlte Schokoladenmasse mit dem Impfmaterial gemischt wird, wobei das verwendete Impfmaterial eine gekühlte Mischung bei einer Temperatur von über 30 °C ist, die flüssige Substanz aber die kritische Temperatur nicht überschritten hat und kein kristallines Material in der β'-Phase enthält, und dadurch, dass zur Herstellung fester Schokolade die Mischung anschließend auf die erste Temperatur gekühlt wird.

2. Verfahren nach Anspruch 1,
**dadurch gekennzeichnet, dass** die Menge der zugegebenen flüssigen Substanz 10 - 20 Vol.-% des Fettgehalts der Endmischung beträgt.

3. Verfahren nach Anspruch 1 oder 2,
**dadurch gekennzeichnet, dass** die flüssige Schokoladenmasse vor dem Mischen mit dem Impfmaterial auf eine zweite Temperatur von wenigstens 4 °C unterhalb der kritischen Temperatur gekühlt wird.

4. Verfahren nach einem der vorhergehenden Ansprüche,
**dadurch gekennzeichnet, dass** das Kühlen auf die erste Temperatur nach der Zugabe des Impfmaterials mit einer Geschwindigkeit von 0,2 - 3 °C/Min. erfolgt.

5. Verfahren nach einem der vorhergehenden Ansprüche,
**dadurch gekennzeichnet, dass** das Verfahren als kontinuierliches Verfahren durchgeführt wird.

6. Verfahren nach Anspruch 5,
**dadurch gekennzeichnet, dass** die Mischung in einen ersten relativ kleinen Strom und einen zweiten relativ großen Strom geteilt wird, wobei der erste Strom langsamer als der zweite Strom gekühlt und anschließend als Impfmaterial verwendet wird, während der zweite Strom gekühlt wird, um feste Schokolade zu ergeben.


**Revendications**

1. Procédé pour la production de chocolat, procédé qui comprend les étapes consistant

a) à préparer une masse de chocolat refroidie mais encore liquide qui comprend i) une matière grasse choisie entre le beurre de cacao et des équivalents de beurre de cacao (CBE), et au moins un constituant choisi entre a) le sucre, b) une masse de cacao et c) une poudre de cacao,
b) à mélanger la masse de chocolat liquide à une matière d'ensemencement, et
c) à laisser le mélange refroidir à une première température inférieure à la température de fusion du chocolat, ce qui produit du chocolat solide,

la matière d'ensemencement utilisée dans l'étape b) étant le mélange refroidi, **caractérisé en ce que**, lors de la préparation de la masse de chocolat liquide, celle-ci est chauffée à une température supérieure à la température critique et est ensuite refroidie à une seconde température entre la première température et la température critique, la masse de chocolat ainsi refroidie est mélangée à la matière d'ensemencement, la matière d'ensemencement utilisée consistant en le mélange refroidi à une température supérieure à 30°C, mais la substance liquide n'ayant pas dépassé la température critique et ne contenant pratiquement aucune matière cristalline en phase β', et **en ce que**, pour produire du chocolat solide, le mélange est ensuite refroidi à la première température.

2. Procédé suivant la revendication 1, **caractérisé en ce que** la quantité de substance liquide ajoutée est comprise dans l'intervalle de 10 à 20 % en volume de la teneur en matière grasse du mélange final.

**3.** Procédé suivant la revendication 1 ou 2, **caractérisé en ce que**, avant d'être mélangée à la matière d'ensemencement, la masse de chocolat liquide est refroidie à une seconde température inférieure d'au moins 4°C à la température critique.

**4.** Procédé suivant l'une des revendications précédentes, **caractérisé en ce que** le refroidissement à la première température après l'addition de la matière d'ensemencement s'effectue à une vitesse de 0,2 à 3°C/minute.

**5.** Procédé suivant l'une des revendications précédentes, **caractérisé en ce qu'**il est mis en oeuvre sous forme d'un procédé continu.

**6.** Procédé suivant la revendication 5, **caractérisé en ce que** le mélange est divisé en un premier courant relativement petit et un second courant relativement volumineux, dans lequel le premier courant est refroidi plus lentement que le second courant, et est ensuite utilisé comme matière d'ensemencement, tandis que le second courant est refroidi en donnant du chocolat solide.